# EUROPEAN PATENT APPLICATION

(11) **EP 4 498 497 A1**
(43) Date of publication of application: **29.01.2025**
(21) Application number: 24790092.1
(22) Date of filing: 26.06.2024
(51) Int. Cl.: H01M 50/271, H01M 50/507

(54) **CCS PROTECTIVE CAP, CCS ASSEMBLY AND BATTERY PACK**

(30) Priority: 26.06.2023 CN 202310756952
(71) Applicant: Eve Energy Co., Ltd., Huizhou, Guangdong 516006 (CN)
(72) Inventor: HUANG, Zhihua, Huizhou, Guangdong 516006 (CN)
(74) Representative: Grünecker Patent- und Rechtsanwälte PartG mbB
(86) International application number: PCT/CN2024/101595
(87) International publication number: WO 2024/245452

(57) **Abstract**

A cells contact system, CCS, protective cover provided by the present application covers a portion where an output stage aluminum busbar (20) in a battery pack is electrically connected to a connection copper busbar. The CCS protective cover includes a protective housing (1). A first avoidance position (11) is disposed on at least one side of the protective housing (1). The first avoidance position (11) is configured to face the connection copper busbar so that the connection copper busbar extends into the protective housing (1) through the first avoidance position (11) to be electrically connected to the output stage aluminum busbar (20).

## Description

The present application claims priority to Chinese Patent Application No. 202310756952.5 filed with the China National Intellectual Property Administration (CNIPA) on June 26, 2023, the disclosure of which is incorporated herein by reference in its entirety.

### TECHNICAL FIELD

The present application relates to the field of battery technology, for example, a cells contact system (CCS) protective cover, a CCS assembly, and a battery pack.

### BACKGROUND

With the development of economy and the progress of science and technology, power batteries are widely used in industries such as electric vehicles. To guarantee that a power battery can work within a specified voltage range and a specified temperature range, a CCS assembly needs to collect voltage signals and temperature signals from a plurality of battery modules in a battery pack.

In the related art, a CCS assembly usually includes an output stage aluminum busbar, a CCS bracket, and a CCS protective cover. The output stage aluminum busbar and a collection circuit board are integrated on the CCS bracket. The output stage aluminum busbar is electrically connected to a connection copper busbar to which a plurality of battery modules are connected in series. The CCS protective cover covers the CCS bracket and is configured to protect a portion where the output stage aluminum busbar is electrically connected to the connection copper busbar.

### TECHNICAL PROBLEM

A connection copper busbar needs to extend into a CCS protective cover to be electrically connected to an output stage aluminum busbar. Before such an arrangement, the connection copper busbar needs to be bent. Then the bent connection copper busbar extends from the bottom of the CCS protective cover into the CCS protective cover to be electrically connected to the output stage aluminum busbar, greatly increasing the processing cost of the connection copper busbar.

### TECHNICAL SOLUTION

In a first aspect, the present application provides a CCS protective cover configured to cover a portion where an output stage aluminum busbar is electrically connected to a connection copper busbar. The CCS protective cover includes a protective housing.

A first avoidance position is disposed on a side of the protective housing. The first avoidance position is configured to face the connection copper busbar so that the connection copper busbar extends into the protective housing through the first avoidance position to be electrically connected to the output stage aluminum busbar.

In some embodiments, a first avoidance position is disposed on each of at least two sides of the protective housing. The CCS protective cover further includes protective side plates.

A protective side plate is blocked at each first avoidance position. The protective side plate is configured to be virtually connected to the protective housing and to be disconnected from the protective housing to expose the first avoidance position under an action of an external force so that the connection copper busbar extends into the protective housing through the exposed first avoidance position to be electrically connected to the output stage aluminum busbar.

In some embodiments, the protective side plate includes a plurality of virtual connection blocks spaced apart. The plurality of virtual connection blocks are located at connections between the protective side plate and the protective housing. The plurality of virtual connection blocks are virtually connected to the protective housing.

In some embodiments, the plurality of virtual connection blocks are each in a shape of a frustum.

In some embodiments, an elastic arm is disposed on each of two opposite sides of the protective housing. Two elastic arms are configured to be inserted in and have an interference fit with two engagement recesses on a CCS bracket carrying the output stage aluminum busbar in a one-to-one correspondence.

In some embodiments, the elastic arm includes a first sidewall plate, a bottom plate, and a second sidewall plate that are connected in sequence. The first sidewall plate and the second sidewall plate are opposite to each other and are spaced apart. The first sidewall plate is connected to the protective housing. The first sidewall plate, the bottom plate, and the second sidewall plate are inserted in a corresponding one of the two engagement recesses.

In some embodiments, a second avoidance position is disposed on the elastic arm. The second avoidance position penetrates the first sidewall plate of the elastic arm and the second sidewall plate of the elastic arm and is configured to avoid the connection copper busbar and the protective side plate that are on the same side.

In some embodiments, the elastic arm further includes an external extension plate. The external extension plate and the second sidewall plate that are on the same elastic arm are connected to each other. The external extension plate extends in a direction away from the first sidewall plate on the same elastic arm and is configured to extend out of a corresponding engagement recess.

In some embodiments, a first engagement head is disposed on the elastic arm. The first engagement head is configured to be secured to and engage with a second engagement head on a recess wall of the corresponding engagement recess. An interference length of an engagement of the first engagement head with the second engagement head is in a range of 0.3 mm to 0.5 mm.

In some embodiments, a first engagement entry angle is disposed on the first engagement head and is in an angle range of 30° to 60°.

In a second aspect, the present application provides a CCS assembly. The CCS assembly includes an output stage aluminum busbar, a CCS bracket, and the preceding CCS protective cover. The CCS bracket carries the output stage aluminum busbar. The CCS protective cover is inserted in and secured on the CCS bracket. The CCS protective cover is configured to cover the portion where the output stage aluminum busbar is electrically connected to the connection copper busbar.

In a third aspect, the present application provides a battery pack. The battery pack includes a connection copper busbar, a plurality of battery modules, and the preceding CCS assembly. The connection copper busbar is configured to connect the plurality of battery modules in series and electrically connected to the output stage aluminum busbar.

### BENEFICIAL EFFECTS

The present application has the beneficial effects below.

A CCS protective cover provided in the present application includes a protective housing. A first avoidance position is disposed on the side of the protective housing. The first avoidance position is configured to face the connection copper busbar so that the connection copper busbar extends into the protective housing through the first avoidance position to be electrically connected to an output stage aluminum busbar. The connection copper busbar extends into the protective housing without being bent, reducing the processing cost of the connection copper busbar.

The present application further provides a CCS assembly. The CCS protective cover is applied so that the connection copper busbar extends into the CCS protective cover with no need for the bending process, reducing the processing cost of the connection copper busbar.

For a battery pack provided in the present application, the CCS assembly is applied so that the connection copper busbar extends into the CCS protective cover with no need for the bending process, reducing the processing cost of the connection copper busbar.

### BRIEF DESCRIPTION OF THE DRAWINGS

FIG. 1 is a structural view of a CCS assembly according to some embodiments of the present application.
FIG. 2 is an enlarged view of FIG. 1 at A.
FIG. 3 is a structural view of a CCS protective cover according to some embodiments of the present application.
FIG. 4 is a sectional view of the CCS protective cover according to some embodiments of the present application.
FIG. 5 is a view illustrating that a connection copper busbar connects to a plurality of battery modules in series according to some embodiments of the present application.

In the drawings:
10, CCS protective cover; 1, protective housing; 11, first avoidance position; 12, third avoidance position; 2, protective side plate; 21, virtual connection block; 3, elastic arm; 31, first sidewall plate; 32, bottom plate; 33, second sidewall plate; 331, first engagement head; 3311, first engagement entry angle; 34, external extension plate; 35, second avoidance position;
20, output stage aluminum busbar;
30, CCS bracket; 301, engagement recess; 302, second engagement head; 302, second engagement entry angle.

### DETAILED DESCRIPTION

In the description of the present application, terms "joined", "connected" and "secured" are to be understood in a broad sense unless otherwise expressly specified and limited. For example, the term "connected" may refer to "fixedly connected", "detachably connected", or "integrated", may refer to "mechanically connected" or "electrically connected", or may refer to "connected directly", "connected indirectly through an intermediary", or "connected inside two elements" or "an interaction relation between two elements". For those of ordinary skill in the art, specific meanings of the terms in the present application may be understood based on specific situations.

In the present application, unless otherwise specified and limited, when a first feature is described as being "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is at a higher level than the second feature. When the first feature is described as "under", "below", or "underneath" the second feature, the first feature is right under, below, or underneath the second feature, the first feature is obliquely under, below, or underneath the second feature, or the first feature is at a lower level than the second feature.

In the description of the present application, it should be noted that the orientations or position relations indicated by terms such as "above", "below", "left", "right" and the like are based on orientations or position relations shown in the drawings. These orientations or position relations are intended to facilitate and simplify description of the present application, and not to indicate or imply that a device or element referred to must have such specific orientations or must be configured or operated in such specific orientations. Thus, these orientations or position relations are not to be construed as limiting the present application. In addition, the terms "first" and "second" are used to distinguish between descriptions and have no special meaning.

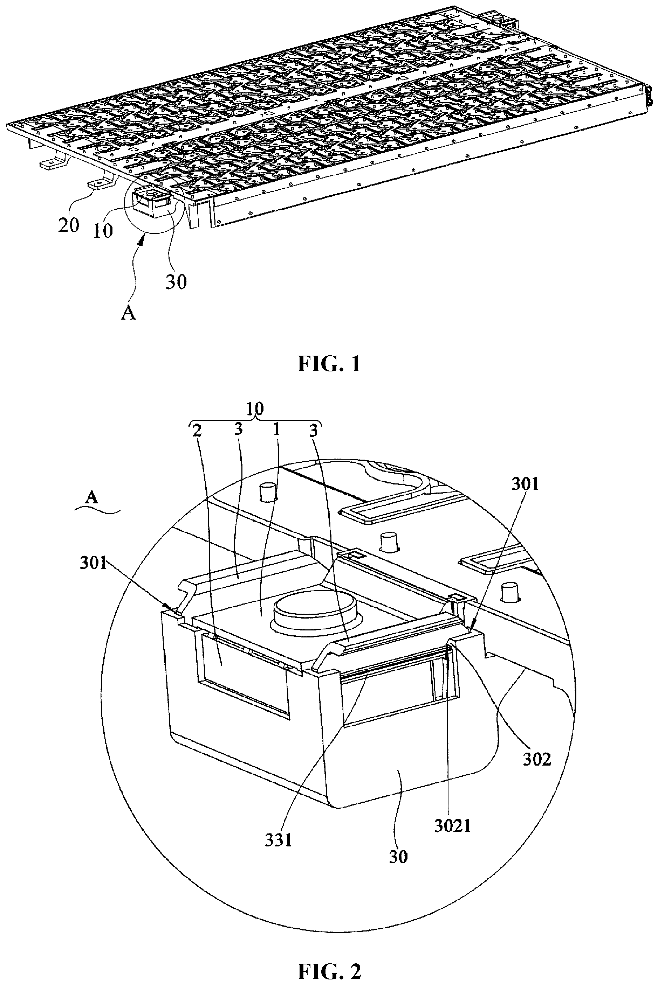

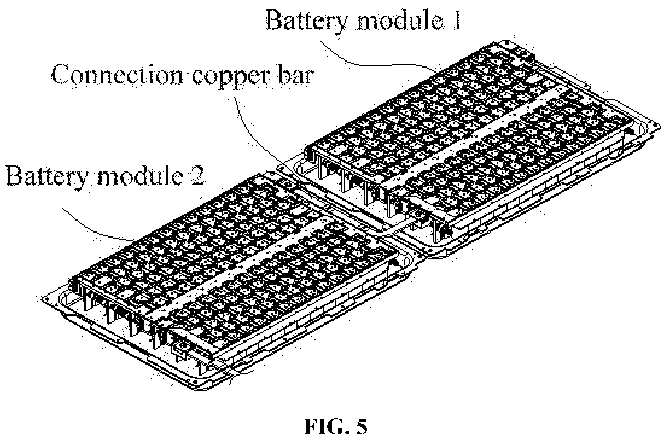

This embodiment provides a CCS assembly mainly configured to collect voltage signals and temperature signals on a plurality of battery modules in a battery pack. As shown in FIGS. 1 and 2, the CCS assembly provided in this embodiment includes an output stage aluminum busbar 20, a CCS bracket 30, and a CCS protective cover 10. The output stage aluminum busbar 20 is carried on the CCS bracket 30. The CCS protective cover 10 is inserted in and secured on the CCS bracket 30. The CCS protective cover 10 is configured to cover a portion where the output stage aluminum busbar 20 is electrically connected to a connection copper busbar. Additionally, a collection circuit board (not shown) is integrated on the CCS bracket 30. The collection circuit board is electrically connected to the output stage aluminum busbar 20. The connection copper busbar implements the series connection between the plurality of battery modules (as shown in FIG. 5) to enable the collection circuit board to collect voltage signals on the battery modules. Moreover, a temperature detection member may be integrated on the collection circuit board to facilitate the collection of temperature signals of the battery modules. In this embodiment, the CCS bracket 30 is a plastic bracket, thereby guaranteeing the electrical insulation of the CCS bracket 30.

The connection copper busbar needs to extend into the CCS protective cover 10 to be electrically connected to the output stage aluminum busbar 20. Therefore, the connection copper busbar needs to be bent so that the connection copper busbar extends into the CCS protective cover 10 from the bottom of the CCS protective cover 10. The arrangement of bending the connection copper busbar greatly increases the processing cost of the connection copper busbar.

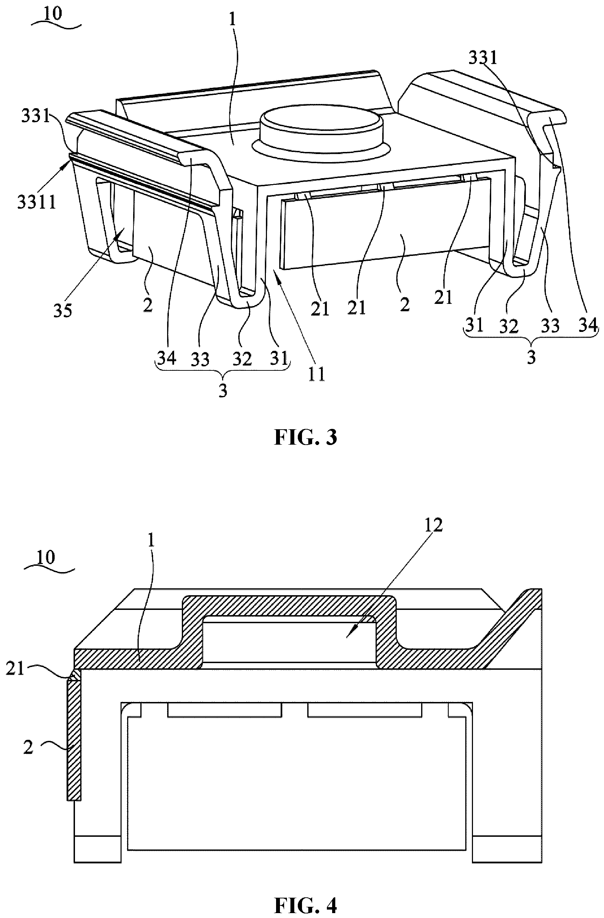

As shown in FIGS. 2 and 3, the CCS protective cover 10 provided in this embodiment includes a protective housing 1. A first avoidance position 11 is disposed on a side of the protective housing 1. The first avoidance position 11 is configured to face the connection copper busbar so that the connection copper busbar extends into the protective housing 1 through the first avoidance position 11 to be electrically connected to the output stage aluminum busbar 20. The arrangement in which the first avoidance position 11 is disposed on the side of the protective housing 1 enables the connection copper busbar to be electrically connected to the output stage aluminum busbar 20 in the protective housing 1 directly through the first avoidance position 11. The connection copper busbar can, with no need for being bent, extend into the protective housing 1, reducing the processing cost of the connection copper busbar. The first avoidance position 11 faces the connection copper busbar, guaranteeing that the connection copper busbar and the first avoidance position 11 are directly opposite to each other. In this case, the connection copper busbar, with no need for being bent, extends into the protective housing 1 directly through the first avoidance position 11.

In this embodiment, as shown in FIGS. 2 and 3, a first avoidance position 11 is disposed on each of at least two sides of the protective housing 1. The CCS protective cover 10 further includes protective side plates 2. A protective side plate 2 is blocked at each first avoidance position 11. The protective side plate 2 is virtually connected to the protective housing 1. The protective side plate 2 may be disconnected from the protective housing 1 so that the connection copper busbar extends into the protective housing 1 through the respective exposed first avoidance position 11 to be electrically connected to the output stage aluminum busbar 20. When the connection copper busbar needs to extend into the protective housing 1 through a first avoidance position 11 of the protective housing 1 where a protective side plate 2 is blocked, the protective side plate 2 may be disconnected from the protective housing 1 to expose the first avoidance position 11 at the position, thereby enabling the connection copper busbar to pass through. Protective side plates 2 at other first avoidance positions 11 are still virtually connected to the protective housing 1, preventing foreign objects such as external dust and welding slag from entering into the CCS protective cover 10, and guaranteeing the protective effect of the CCS protective cover 10. In this case, the connection copper busbar can be enabled to extend into the CCS protective cover 10 from multiple directions to be electrically connected to the output stage aluminum busbar 20, thereby improving the applicability of the CCS protective cover 10. "Virtual connection" refers to that the protective side plate 2 is connected to the protective housing 1 in a normal state and, under the action of an external force, can be relatively easily broken so that the protective side plate 2 is disconnected from the protective housing 1.

In this embodiment, the first avoidance position 11 is disposed on each of three sides of the protective housing 1. After the output stage aluminum busbar 20 is bent, the output stage aluminum busbar 20 extends into the CCS protective cover 10 through the bottom of the remaining side of the protective housing 1 so that the connection copper busbar can extend into the CCS protective cover 10 through the first avoidance positions 11 in the three directions. In other embodiments, a first avoidance position 11 may be disposed on each of the four sides of the protective housing 1 so that the output stage aluminum busbar, without being bent, directly extends into the CCS protective cover 10 through one of the first avoidance positions 11.

As shown in FIG. 3, a protective side plate 2 includes a plurality of virtual connection blocks 21 spaced apart. Each virtual connection block 21 is located at a connection between the protective side plate 2 and the protective housing 1. The virtual connection blocks 21 are virtually connected to the protective housing 1. When the protective side plate 2 needs to be disconnected from the protective housing 1, the protective side plate 2 may be bent directly. In this case, the virtual connection blocks 21 are disconnected from the protective housing 1 under the action of an external force. In this embodiment, the protective side plate 2 includes three virtual connection blocks 21 spaced apart. In other embodiments, two, four, or more virtual connection blocks 21 may be provided as long as the protective side plate 2 can be easily disconnected from the protective housing 1 under the action of an external force. In this embodiment, each virtual connection block 21 is in the shape of a frustum. Moreover, a top surface of the frustum with a small area is virtually connected to the protective housing 1, guaranteeing the structural strength of the virtual connection block 21 and enabling the virtual connection block 21 to be disconnected from the protective housing 1 under the action of an external force.

When the CCS protective cover 10 is inserted on the CCS bracket 30, the CCS protective cover 10 is easy to shake after assembly, greatly reducing the reliability of mounting the CCS protective cover 10 on the CCS bracket 30.

As shown in FIGS. 2 and 3, the CCS protective cover 10 further includes elastic arms 3. An elastic arm 3 is disposed on each of two opposite sides of the protective housing 1. Two engagement recesses 301 are disposed on the CCS bracket 30. The two elastic arms 3 are inserted in and have an interference fit with the two engagement recesses 301 in a one-to-one correspondence. The arrangement in which the elastic arms 3 are inserted in the engagement recesses 301 on the CCS bracket 30 guarantees the stability of the CCS protective cover 10 inserted on the CCS bracket 30 and enables the elastic arms 3 to be inserted in the engagement recesses 301 by using the elastic deformation of the elastic arms 3, making the mounting convenient. In this embodiment, the elastic arms 3 may be made of polycarbonate (PC) + acrylonitrile butadiene styrene (ABS) and have the advantage of sound flexibility.

An elastic arm 3 includes a first sidewall plate 31, a bottom plate 32, and a second sidewall plate 33 that are connected in sequence. The first sidewall plate 31 and the second side wall plate 33 are opposite to each other and are spaced apart. The first sidewall plate 31 is connected to the protective housing 1. The first sidewall plate 31, the bottom plate 32, and the second sidewall plate 33 are inserted in a corresponding engagement recess 301. With such a design of the elastic arm 3, when the elastic arm 3 needs to be pulled out of or inserted in the engagement recess 301, the elastic arm 3 may be squeezed by using the elasticity of the elastic arm 3 to reduce the distance between the first sidewall plate 31 and the second sidewall plate 33. When the squeezing force on the elastic arm 3 is removed, the elastic arm 3 is restored under the elasticity of the elastic arm 3, guaranteeing the tightness of the elastic arm 3 in the engagement recess 301.

In this embodiment, a second avoidance position 35 is disposed on the elastic arm 3. The second avoidance position 35 penetrates the first sidewall plate 31 and the second sidewall plate 33 and is configured to avoid the connection copper busbar and the protective side plate 2 to prevent the elastic arm 3 from interfering with the insertion of the connection copper busbar.

Additionally, as shown in FIGS. 2 and 3, the elastic arm 3 further includes an external extension plate 34. The external extension plate 34 is connected to the second sidewall plate 33. Moreover, the external extension plate 34 extends in a direction away from the first sidewall plate 31 to extend out of the engagement recess 301. With the arrangement of the external extension plate 34, when the elastic arm 3 needs to be pulled out of or inserted in the engagement recess 301, external extension plates 34 on two elastic arms 3 may be squeezed inward simultaneously so that the distance between the first sidewall plate 31 and the second sidewall plate 33 that are on each elastic arm 3 is synchronously reduced, facilitating the operation.

In this embodiment, a first engagement head 331 is disposed on an outer sidewall of the second sidewall plate 33. A second engagement head 302 is disposed on a recess wall of the engagement recess 301. The first engagement head 331 is secured to and engages with the second engagement head 302. Moreover, the interference length of the engagement of the first engagement head 331 with the second engagement head 302 is in the range of 0.3 mm to 0.5 mm, guaranteeing that the elastic arm 3 is in a squeezed state when the elastic arm 3 is in the engagement recess 301 and guaranteeing the stability of the engagement of the elastic arm 3 in the engagement recess 301. In this embodiment, the interference length of the engagement of the first engagement head 331 with the second engagement head 302 is 0.4 mm.

In this embodiment, a first engagement entry angle 3311 is disposed on the first engagement head 331. A second engagement entry angle 3021 is disposed on the second engagement head 302. The angle degree of the first engagement entry angle 3311 and the angle degree of the second engagement entry angle 3021 are the same. The first engagement entry angle 3311 is in the angle range of 30° to 60°, thereby providing guidance for the engagement operation of the elastic arm 3 in the engagement recess 301 and facilitating the engagement and securing of the first engagement head 331 with the second engagement head 302 In this embodiment, each of the angle degree of the first engagement entry angle 3311 and the angle degree of the second engagement entry angle 3021 is 45°.

Additionally, in this embodiment, as shown in FIG. 4, the protective housing 1 is recessed in a direction away from the output stage aluminum busbar 20 to form a third avoidance position 12. The third avoidance position 12 is configured to avoid the portion where the connection copper busbar is electrically connected to the output stage aluminum busbar 20, thereby preventing the protective housing 1 from interfering with the portion where the connection copper busbar is electrically connected to the output stage aluminum busbar 20, thus making the structure of the entire CCS protective cover 10 more compact.

This embodiment further provides a battery pack. The battery pack includes the connection copper busbar and a plurality of battery modules. The connection copper busbar is configured to implement the series connection of the battery modules. The battery pack also includes the CCS assembly. The connection copper busbar is electrically connected to the output stage aluminum busbar 20. For the battery pack provided in this embodiment, the CCS assembly is applied so that the connection copper busbar extends into the CCS protective cover 10 without a bending process, reducing the processing cost of the connection copper busbar.

## Claims

1. A cells contact system, CCS, protective cover, wherein the CCS protective cover is configured to cover a portion where an output stage aluminum busbar (20) is electrically connected to a connection copper busbar, and the CCS protective cover comprises:
a protective housing (1), wherein a first avoidance position (11) is disposed on a side of the protective housing (1), and the first avoidance position (11) is configured to face the connection copper busbar so that the connection copper busbar extends into the protective housing (1) through the first avoidance position (11) to be electrically connected to the output stage aluminum busbar (20).

2. The CCS protective cover according to claim 1, wherein the first avoidance position (11) is disposed on each of at least two sides of the protective housing (1), and the CCS protective cover further comprises:
protective side plates (2), wherein a protective side plate (2) of the protective side plates (2) is blocked at each first avoidance position (11), the protective side plate (2) is virtually connected to the protective housing (1), the protective side plate (2) is configured to be virtually connected to the protective housing (1), and the protective side plate (2) is configured to be disconnected from the protective housing (1) to expose a respective first avoidance position (11) under an action of an external force so that the connection copper busbar extends into the protective housing (1) through the exposed first avoidance position (11) to be electrically connected to the output stage aluminum busbar (20).

3. The CCS protective cover according to claim 2, wherein the protective side plate (2) comprises a plurality of virtual connection blocks (21) spaced apart, the plurality of virtual connection blocks (21) are located at connections between the protective side plates (2) and the protective housing (1), and the plurality of virtual connection blocks (21) are virtually connected to the protective housing (1).

4. The CCS protective cover according to claim 3, wherein each of the plurality of virtual connection blocks (21) is in a shape of a frustum.

5. The CCS protective cover according to any one of claims 2 to 4, wherein an elastic arm (3) is disposed on each of two opposite sides of the protective housing (1) and configured to be inserted in and have an interference fit with one of two engagement recesses (301) on a CCS bracket (30) in a one-to-one correspondence, and the CCS bracket (30) is configured to carry the output stage aluminum busbar (20).

6. The CCS protective cover according to claim 5, wherein the elastic arm (3) comprises a first sidewall plate (31), a bottom plate (32), and a second sidewall plate (33) that are connected in sequence; the first sidewall plate (31) and the second sidewall plate (33) are opposite to each other and are spaced apart; the first sidewall plate (31) is connected to the protective housing (1); and the first sidewall plate (31), the bottom plate (32), and the second sidewall plate (33) are inserted in a corresponding one of the two engagement recesses (301).

7. The CCS protective cover according to claim 6, wherein a second avoidance position (35) is disposed on the elastic arm (3), and the second avoidance position (35) penetrates the first sidewall plate (31) of the elastic arm (3) and the second sidewall plate (33) of the elastic arm (3) and is configured to avoid the connection copper busbar and the protective side plate (2) that are on a same side.

8. The CCS protective cover according to claim 6, wherein the elastic arm (3) further comprises an external extension plate (34), the external extension plate (34) and the second sidewall plate (33) that are on a same elastic arm (3) of the two elastic arms (3) are connected to each other, and the external extension plate (34) on the same elastic arm (3) extends in a direction away from the first sidewall plate (31) on the same elastic arm (3) and is configured to extend out of a corresponding one of the two engagement recesses (301).

9. The CCS protective cover according to claim 5, wherein a first engagement head (331) is disposed on the elastic arm (3), the first engagement head (331) is configured to be secured to and engage with a second engagement head (302) on a recess wall of a corresponding one of the two engagement recesses (301), and an interference length of an engagement of the first engagement head (331) with the second engagement head (302) is in a range of 0.3 mm to 0.5 mm.

10. The CCS protective cover according to claim 9, wherein a first engagement entry angle (3311) is disposed on the first engagement head (331) and is in an angle range of 30° to 60°.

11. A cells contact system, CCS, assembly, comprising an output stage aluminum busbar (20), a CCS bracket (30), and the CCS protective cover according to any one of claims 1 to 10, wherein the output stage aluminum busbar (20) is carried on the CCS bracket (30), the CCS protective cover is inserted in and secured on the CCS bracket (30), and the CCS protective cover is configured to cover the portion where the output stage aluminum busbar (20) is electrically connected to the connection copper busbar.

12. A battery pack, comprising a connection copper busbar, a plurality of battery modules, and the CCS assembly according to claim 11, wherein the connection copper busbar is configured to implement a series connection of the plurality of battery modules and the connection copper busbar is electrically connected to the output stage aluminum busbar (20).
